# EUROPEAN PATENT APPLICATION

(11) **EP 1 911 771 A1**
(43) Date of publication of application: **16.04.2008**
(21) Application number: 06021165.3
(22) Date of filing: 09.10.2006
(51) Int. Cl.: C08F 2/22, C08F 2/26, C08F 265/04, C08F 265/06, C08F 257/02, C08L 51/00, C09D 151/00, C09J 151/00

(54) **Acqueous polymer dispersion and process**

(71) Applicant: CYTEC SURFACE SPECIALTIES, S.A., 1070 Bruxelles (BE)
(72) Inventor: The designation of the inventor has not yet been filed
(74) Representative: Kirk, Martin John

(57) **Abstract**

There is described a multi step process for preparing an aqueous dispersion of heterogeneous polymer particles by mini-emulsion polymerisation, the process comprising the steps of (I) (a) forming a mixture comprising: (i) water; (ii) at least one stabiliser (such as a surfactant and a hydrophobic co-stabliiser); (iii) at least one tackifier (such as polyterpenes, rosin resins and/or hydrocarbon resins); (iv) at least one α,β-ethylenically unsaturated monomer;, (b) applying high shear to the mixture from step (a) to form an essentially stable mini-emulsion comprising an aqueous continuous phase and dispersed therein stabilised droplets of average diameter from about 10 to about 1000 nm, (c) polymerising the monomer(s) within the droplets in the presence of a free radical initiator; (d) adding further monomer to the dispersed phase to form a dispersion; then: (II) using the dispersion from step (I) as a seed to form a dispersion of heterogeneous polymer particles in a subsequent emulsion polymerisation. The resultant tackified PSAs may have a core shell structure and are stable under high shear.

## Description

The present invention relates to the field of pressure sensitive adhesives (PSA) comprising tackified acrylic emulsions.

It is desirable that PSA emulsions exhibit improved adhesion to a wide variety of substrates such as those with a low surface energy (e.g. polymeric film) and other substrate types such as cardboard. One means of doing this is to add a tackifier species such as polyterpene, rosin ester and/or hydrocarbon. However adding tackifiers to an emulsion can have a detrimental effect on the stability of an aqueous latex especially if the latex is subject to high shear.

Dispersions of tackifiers in water are unstable under high shear as they coagulate. For example hydrocarbon tackifiers typically coagulate at a shear rate above 4000 to 5000s⁻¹. When such tackifier dispersions are added to a conventional acrylic PSA emulsion the resultant blend also coagulates under high shear.

High speed coating machines used to apply commercial PSAs at high volumes generate high shear fields. This severely limits the commercial use of tackified-acrylic emulsions as PSAs. For example typical equipment such as Moyno pumps, slot dies, pressurized gravure and curtain coaters generate shear fields of typically over 150,000s⁻¹ in the coating head and/or in the progressive cavity pump. If conventional tackified acrylic emulsions are used in these machines the emulsion de-stabilises under the high shear field to form coagulum. The coagulum blocks the die, causes scratch lines on the coating web and builds up high pressure in the die and pump. Excess coagulum must therefore be removed and this requires the coater to be temporarily shut down which is undesirable as it increases cost.

There is a belief amongst formulators that adding tackifiers to a PSA can be disadvantageous for some applications. For example tackifiers may have a detrimental effect on a PSA film applied to a transparent facestock such as a polymeric film as haziness might be increased, or the PSA might colour on aging with heat or UV. To address these issues certain hydrocarbon tackifiers have been used in PSAs as they are believed to exhibit better colour and peel properties that other tackifier types. But because of the poor high shear stability of hydrocarbon tackifiers these PSAs can only be used where the PSA is coated onto the film at low speed and therefore is not subject to high shear. Yet to be useful for commercial high volume applications a PSA must be applied to a film at high speed and therefore will be subject to high shear.

Therefore current commercial PSAs applied to clear substrates (such as polymer films) are not tackified. Instead to improve PSA adhesion to a surface of low surface energy and to provide good wet out and clarity, these untackified PSAs are prepared from acrylic polymer of low gel content and low molecular weight. Such modifications to the PSA create their own disadvantages for example inferior convertibility due to excessive oozing of adhesive at the film edge.

It has also been tried to improve the stability of tackifier dispersions by various other methods such as selecting an appropriate surfactant and/or by preparing the tackifier dispersion with the correct range of particle size. However these methods have other disadvantages, for example they restrict the ingredients that can be used, require careful control of the process and/or limit the properties of the final PSA.

The applicant has discovered that a mini-emulsion process may be used to incorporate hydrocarbon tackifiers stably in an acrylic emulsion to give a tackified PSA having improved adhesive properties. Usefully such tackified PSAs can be applied to a substrate under high shear conditions. Advantageously tackified PSAs can be produced having an optimum balance between their cohesive and adhesive properties.

Aqueous polymer dispersions have been prepared by mini-emulsion polymerisation for several years. This is a method where monomer(s) are dispersed in nano-sized droplets, the dispersed phase of an oil in water emulsion. The monomer emulsions used in mini-emulsion polymerisation have an average droplet diameter from 10 to 1000 nm and can be distinguished from conventional monomer emulsions and emulsion polymerisation processes, where the size of the droplets or micelles is larger from 1 to 10 µm (microns). In a mini-emulsion method each nano-sized droplet becomes the primary locus for nucleation and polymerization which thus occurs in a highly parallel fashion producing polymer latex particles of about the same size as the initial droplets. Mini-emulsion polymerization offers a number of advantages over conventional emulsion polymerisation as for example hydrophobic components may be encapsulated or incorporated into the polymer during the polymerisation.

Various mini-emulsions have been described together with methods of stabilising them.

WO 04/069879 (UCB, now assigned to Cytec) describes use of an amphiphilic stabilising polymer having a number average molecular weight Mₙ of 800 to 100,000 and an acid number of 50 to 400 mg KOH/g to stabilise the mini-emulsion droplets.

WO 00/29451 (Max Planck) and US 5,686,518 (Georgia Tech) disclose a series of hydrophobic components that are suitable for the stabilisation of mini-emulsions. These documents teach that surfactants are needed in addition to these hydrophobic components to stabilise both the emulsion droplets and the polymer particles obtained after polymerization. The surfactants used are: sodium lauryl sulfate or other alkylsulfates, sodium dodecyl benzene sulfonate or other alkyl or aryl sulfonates, sodium stearate or other fatty acid salts, or polyvinyl alcohol.

US 2002/131941 A1 (BASF) (= EP 1191041) describes coloured aqueous polymer dispersions of average particle size below 1000 nm which used as cosmetics. This reference describes a stabilising system to replace anionic surfactants which are skin irritants comprising from 0.1 to 20% of at least one non-ionic surface active compound (NS) with from 1 to 50% of at least one amphiphilic polymer (PA) having 0.5 to 10 mol/kg of anionic functional groups.

US 5,952,398 (3M) describes pressure sensitive adhesives (PSA) made by mini-emulsion polymerisation. The PSA has two bi-continuous phases a hydrophobic PSA polymer and a hydrophilic polymer. These compositions are prepared from surfactant stabilised oil in water mini-emulsions. The aqueous continuous phase comprises free-radically ethylenically unsaturated polar amphiphilic or hydrophilic monomer(s) or oligomer(s). The dispersed oil phase comprises micron sized droplets of free-radically ethylenically unsaturated hydrophobic monomer(s) which after polymerisation form large micron sized polymer particles.

A description of typical mini-emulsion is given in chapter one of the thesis for a Doctorate in chemistry presented 30 March 1992 to the University Claude Bernard by Keltoum Ouzineb entitled "Emulsion and mini-emulsion polymerization :stabilization, tubular reactor and practical applications". This process and any other typical mini-emulsion process conditions known to those skilled in the art may be used in the mini-emulsion step of the process of the present invention.

The following literature references also describes aspects of processes for preparing mini-emulsions and the contents of these papers are hereby incorporated by reference:
Mini-emulsion Polym Rev Schork (Adv Polym Sci175129-2552005)";
Mini-emulsion Polym Rev, Capek (Adv Polym Sci,155,101-165,2001"
Mini-emulsion Polym Rev, Landfester (Top Curr Chem,227,75-123,2003)
M. Antonietti, K. Landfester, Prog. Polym. Sci., 2002, 27, 689; and
J. M. Asua, Prog. Polym. Sci., 2002, 27, 1283.

None of the prior art references suggest incorporation of tackifiers in the dispersed hydrophobic phase of a mini-emulsion and indeed given the difficulties of stabilising both tackifiers and mini-emulsions there would be every reason not to do so. It has proved difficult to produce polymers having both a good stability and a T_{g} in the range suitable for a PSA using a mini-emulsion process.

The present invention overcomes some or all of the problems of the prior art by providing a process for the preparation of tackified aqueous dispersions by mini-emulsion polymerisation where the mini emulsion is subject to a further polymerisation to create a heterogeneous polymer particle with hydrophilic domains at the surface of a hydrophobic particle. Advantageously many of the dispersed particles has a substantially complete hydrophilic shell surrounding a hydrophobic core.

It is a preferred object of the invention to provide a dispersion of heterogeneous particles having a hydrophobic core domain with a sufficiently high T_{g} and low molecular weight so the dispersion can be used to prepare PSAs that overcome some or all of the problems identified herein. Optimising the combination of these three properties to be able to formulate improved PSAs has proved difficult using a classical emulsion polymerisation.

Therefore broadly in accordance with the present invention there is provided a multi step process for preparing an aqueous dispersion of heterogeneous polymer particles by mini-emulsion polymerisation, the process comprising the steps of
(I)
   (a) forming a mixture comprising:
      (i) water;
      (ii) at least one stabiliser;
      (iii) at least one tackifier; and
      (iv) at least one α,β-ethylenically unsaturated monomer; and
   (b) applying high shear to the mixture from step (a) to form an essentially stable mini-emulsion comprising an aqueous continuous phase and dispersed therein stabilised droplets of average diameter from about 10 to about 1000 nm,
   (c) polymerising the monomer(s) within the droplets in the presence of a free radical initiator;
   (d) optionally adding further monomer to the dispersed phase followed by:
(II) using the product (optionally as a dispersion) from step (I) as a seed to form a dispersion of heterogeneous polymer particles in a subsequent emulsion polymerisation.

Optionally the homogeneous polymer particles (e.g. formed from step I and used in step II) comprise a first, domain of a first polymer which may substantially form the first, inner domain of the heterogeneous polymer particles formed in step II.

Optionally the heterogeneous polymer particles (e.g. formed from step II) comprise a first, inner domain of a first polymer located substantially within the interior of the particle (and optionally formed substantially from the homogeneous particles from step I) and a second, outer domain of a second polymer located substantially at and/or towards the surface of the particle. The second domain (or shell) may substantially encapsulate the first domain (or core) to form a so-called 'core-shell' structure or the second domain may comprise a continuous and/or one or more discrete domains on the outer surface of the first domain. For convenience it will be understand that the terms core and shell are used herein to refer to respectively the first, inner domain and second, outer domain(s) of a heterogeneous particle whether or not the outer domain fully or partially encapsulates the inner domain.

It will be appreciated that the polymerisation as described herein may be performed as a batch, continuous and/or semi-continuous process.

A further aspect of the invention provides for a particle dispersion and/or PSA obtained and/or obtainable by the process of the invention as described herein.

Advantageously the PSAs of the invention comprise tackified heterogeneous particles (for example having a core shell structure) where for example the tackifier resin is used as the hydrophobe in a mini-emulsion process.

Without being bound by any mechanism the applicant believes that when the heterogeneous particles of the invention are applied to a substrate to form a film coating thereon the film has a heterogeneous structure comprising a cohesive zone (primarily formed from polymers in the particle shell) and a dissipative zone (primarily formed from polymers in the core). It is also believed that the dissipative zone will contribute to control the adhesion level whereas the "cohesive" zone will maintain the shear strength at a reasonable level. Thus a dispersion of the heterogeneous particles of the present invention comprising tackifier resin may be dried to create a PSA film that comprises both a continuous polymer network having sufficient gel content that the acrylic species therein can be cross-linked and also dispersed domains comprising a hydrophobic compound of low molecular weight.

The process and compositions of the present invention achieve an optimal balance between the cohesion and the adhesion properties of the final PSA. For example the chemical and physical properties of the polymer particles of the invention in both the shell and core may be readily controlled.

The tackifier encapsulation during the synthesis can produce a final polymer presenting a bimodal (two peak) molecular weight distribution comprising two distinct types of particles:
(i) a smaller population of low molecular weight particles that contribute to an improved level of adhesion; and
(ii) a larger population of higher molecular weight particles that ensure a good level of cohesion.

The addition of the second step in the present invention has the advantage of increasing the final solids content and forming a polymer shell comprising functional groups that can be cross-linked to enhance the cohesion level.

Preferably the process of the invention may be performed is multiple steps (such as those illustrated in the Figures herein) to producing hetrogeneous particles (such as those having a core shell structure) by emulsion polymerization. Without wishing to be bound by any mechanism one of the preferred advantages of having a process comprising at least two steps is to produce polymer particles with heterogeneous structure such as an inner core comprising soft co-polymer(s) (for example having a T_{g} about minus 50°C) and an outer shell comprising hard copolymer(s) (for example with a T_{g} between about 0°C and about 30°C). Optionally the shell may also have cross-linkable function groups thereon.

### Stabiliser

As used herein the term "stabiliser" denotes any suitable species that is used to increase the stability of the dispersions used in or of the invention and the term "stabiliser" comprise one or more of any species that may also be referred to by other terms such as colloidal stabiliser, co-stabiliser, co-hydrophobe, detergent, dispersing agent, emulsifier, hydrophobe, surfactant, surface active agent (for example, any substance that may be added to a liquid to increase its spreading or wetting properties by reducing its surface tension), wetting agent and/or any other terms well known to those skilled in the art to refer to similar or analogous species that perform a similar or analogous function to any of the preceding.

In a preferred embodiment of the present invention the stabiliser comprises i) at least one surfactant and/or colloidal stabiliser together with ii) at least one hydrophobic co-stabiliser.

In a preferred process of the invention the stabiliser may comprise any of the amphiphilic stabilising polymers and/or hydrophobic co-stabilisers described WO 04/069879 and any mixtures thereof.

In a further aspect of the process of the present the invention, the stabiliser may comprise one or more hydrophobic co-stabiliser(s) preferably at least one of which is reactive (i.e. which participate in the subsequent polymerisation reaction of the process of the present invention). Reactive hydrophobic co-stabiliser(s) can be used either with or without additional non-reactive hydrophobic co-stabiliser(s).

Preferred reactive hydrophobic co-stabilisers comprise one or more of the following:
hydrophobic (co)monomers, more preferably acrylates, most preferably stearyl acrylate and/or long chain (meth)acrylates,
macromonomers;
hydrophobic chain transfer agents, more preferably dodecyl mercaptane, octadecyl mercaptane and/or other long chain mercaptanes;
hydrophobic initiators, more preferably 2,5-dimethyl-2-5-di(2-ethylhexanoylperoxy) hexane and other long chain (hydro)peroxides, and/or azo initiators and/or
suitable mixtures and/or combinations thereof.

Usefully the hydrophobic co-stabiliser(s) are selected from C₁₂₋₂₄alkanes (especially hexadecane), C₁₂₋₂₄alcohols, C₁₈₋₂₂acrylates (especially the mixture of acrylates available commercially from Atofina under trade name Norsocryl^{™} A-18-22); and/or mixtures thereof.

Conveniently a hydrophobic (co)monomers may be selected which functions both as the hydrophobic co-stabiliser and the α,β-ethylenically unsaturated monomer, in which case the amount of such hydrophobic (co)monomer(s) can be as high as about 70 % by weight. Generally the hydrophobic co-stabiliser may be added in an amount from about 0.05% to about 40% by weight. Especially when the hydrophobic co-stabiliser is not a (co)monomer, the amount of co-stabiliser is preferably from about 0.1 % to about 10%, more preferably from about 0.2% to about 8% and most preferably from about 0.5% to about 5% by weight. The weights of hydrophobic co-stabiliser used herein are calculated relative to the total weight of the mixture prepared in step (a) of the process of the invention.

Usefully the α,β-ethylenically unsaturated monomers used in the process of the invention have a low solubility in water, preferably (measured at 25°C, as a percentage of grams of dissolved monomer per 100 grams of water) less than about 15%, more preferably less than about 5%, and most preferably less than about 3%.

Preferred α,β-ethylenically unsaturated monomers comprise one or more of the following and/or mixtures and combinations thereof:
alkyl (meth)acrylates, more preferably methyl acrylate, methyl methacrylate, ethyl acrylate, ethyl methacrylate, butyl acrylate, butyl methacrylate, 2- ethylhexyl acrylate, cyclohexyl methacrylate, 2-ethylhexyl methacrylate, stearyl methacrylate, isobornyl methacrylate and/or lauryl methacrylate, most preferably methyl methacrylate, methyl acrylate, n-butyl acrylate, ethyl acrylate and/or, 2-ethylhexyl acrylate,
polymerisable aromatic compounds; more preferably styrenes, most preferably styrene, α-methyl styrene, vinyl toluene and/or t-butyl styrene,
polymerisable nitriles ; more preferably acrylonitrile and/or methacrylonitrile,
polymerisable amide compounds,
α-olefin compounds such as ethylene,
vinyl compounds ; more preferably vinyl esters (most preferably vinyl acetate, vinyl propionate and/or longer chain vinyl ester homologues) vinyl ethers, vinyl halides (most preferably vinyl chloride) and/or vinylidene halides,
diene compounds more preferably butadiene and/or isoprene.
α,β-ethylenically unsaturated monomers comprising fluorine and/or silicon atoms, more preferably 1 H, 1 H, 5H-octafluoropentyl acrylate and/or trimethylsiloxyethyl acrylate.

Advantageously the α,β-ethylenically unsaturated monomers are selected from styrenes, acrylates, methacrylates, vinyl and vinylidene halides, dienes, vinyl esters and mixtures thereof; more advantageously from methyl methacrylate, styrene, vinyl acetate, methyl acrylate, butyl acrylate, ethyl acrylate, 2-ethylhexyl acrylate, butadiene and vinyl chloride.

The amount of α,β-ethylenically unsaturated monomers used in the process of the invention may be generally from about 10% to about 70%, preferably from about 18% to about 60% by weight calculated relative to the total weight of the mixture prepared in step (a) of the process of the invention.

According to a still further aspect of the process of the present invention, in addition to the α,β-ethylenically unsaturated monomer(s) one or more water-soluble monomers (denoted herein as secondary monomers) may be added to the mixture formed during step (a). These optional secondary monomers may comprise ethylenically unsaturated organic compounds which can undergo addition polymerisation. Preferred secondary monomers have a water solubility (measured at 25°C, as a percentage of grams of dissolved monomer per 100 grams of water) higher than about 15%. Conveniently secondary monomers may be used only in the presence of at least one α,β-ethylenically unsaturated monomer and only in small percentages in such a monomer mixture. Preferably the amount of optional secondary monomer in such a monomer mixture is less than about 6%, more preferably from about 0.1 % to about 4%, and most preferably from about 0.1% to about 2% by weight relative to the total monomer weight.

Preferred secondary monomers are acrylic acid, methacrylic acid, 2-sulfoethyl methacrylate, and/or maleic anhydride. Using secondary monomers in the process of the invention can impart desired properties to the coatings produced from the resultant polymer dispersions.

The mixture formed in step (a) may also contain one or more components that modify pH. For example if the stabilising amphiphilic polymer comprises carboxylic acid groups, it may be necessary to prepare and polymerise the mini-emulsion at a high pH for the stabilising polymer to exhibit the desired amphiphilcity. For such carboxylic acid functional polymers a suitable pH range may be from about 6.0 to about 10.0, preferably from about 7.5 to about 10.0, depending on the nature of the other components of the amphiphilic polymer. When the stabilising polymer comprises acid functions derived from sulfonic acid, sulphate, phosphate or phosphonate, a suitable range of pH may be from about 2.0 to about 10.0.

Compounds capable of adjusting pH may comprise: ammonia, amines (for example triethyl amine, triethanol amine, dimethylamino hydroxypropane), carbonate salts (for example sodium carbonate), bicarbonate salts (for example sodium bicarbonate), hydroxides (for example sodium hydroxide) and/or oxides (for example calcium oxide). Preferred pH-adjusting compounds are strong bases, optionally selected from an alkali metal hydroxides (such as sodium hydroxide) and/or ammonia.

The pH-adjusting compound may be added during step (a) of the process of the invention, preferably before the amphiphilic polymer is added to the mixture.

Each steps of the method of the invention may be independently carried out under any suitable conditions selected depending on the reagents used. Conveniently any of the steps may be carried out at any suitable temperatures between the freezing point and the boiling point of the various mixture(s) and the components present therein, more conveniently from about 0°C to about 100°C, most conveniently at about ambient temperature. Conveniently the steps may be carried out under pressures from about 0.01 to about 100 atmosphere, more conveniently at about atmospheric pressure.

### Tackifier

The tackifying resin may be selected from one or more suitable hydrophobic tackifier(s) such as polyterpenes, rosin resins and/or hydrocarbon resins.

Rosin tackifiers are obtainable from natural sources such as pine trees for example as a gum rosin, wood rosin and/or tall oil rosin. The rosin may be optionally be partially and/or fully hydrogenated.

Examples of rosin derived tackifers include the families available commercially from Eastman Chemical under the trade names Foralyn (such as Foralyn 90); Abalyn (such as Abalyn E); and/or Permalyn (such as Permalyn 3100).

Hydrocarbon tackifier(s) may comprise aliphatic and/or aromatic hydrocarbon resins either of which may also be hydrogenated. Hydrocarbon tackifying resins are usually formed by polymerising a monomer feedstock obtained as a fraction distilled as a byproduct from cracking naphtha to form ethylene. Such feedstocks may include the C₅hydrocarbon and/or C₉hydrocarbon fractions. Components of C₅hydrocarbon fractions may comprise piperylene, isoprene, cyclopentene, (CP) cyclopentadiene (CPD), trans-1,3-pentadiene, cis-1,3-pentadiene, 2-methyl-2-butene, isomers thereof, other C₅hydrocarbons and/or hydrocarbons with a C₅hydrocarbo repeat unit (such as dimers, trimers, tetramers etc. of the aforegoing - e.g. dicyclopentadiene (DCPD). C₉hydrocarbon fractions may comprise resin oils comprising one or more of the following monomers vinyltoluenes; dicyclopentadiene, indene, methylstyrene, stryene, and/or methylindenes..

Some or all of these fractions or components thereof may be the polymer precursor(s) polymerised (optionally by cationic polymerisation) to a hydrocarbon tackifier resin suitable for use in the adhesives of the present invention. The desired softening point and molecular weight of the hard tackifier resin can be achieved by selecting the appropriate polymerisation conditions for the feedstock such as temperature, pressure and choice of catalyst (e.g. Lewis acid)

Examples of aliphatic hydrocarbon resin tackifiers formed from C₅piperylene feedstock include the family available commercially from Eastman Chemical under the trade name Piccotac, such as those products identified by the trade designations: 1094-E, 1095-N, 1100-E and/or 8095.

Examples of other resin tackifiers include the family aqueous of aqueous dispersions available commercially from Eastman Chemicals under the trade name Tacolyn such as the product identified by the trade designation 1070.

Still other examples of resin tackifiers include the family of terpene resins such as pinene terpene resin and/or terpene stryene resins for example those available commercially from DRT under the trade names Dercolyte A115 (α pinene terpene resin) and/or Dercolyte TS105 (terpene stryene resin).

The ratio of the C₅hydrocarbon and/or C₉hydrocarbon fractions used to form a tackifying resin can be modified by mixing two feed streams together to provide a certain aliphatic/aromatic balance in the resin (which can be usefully be determined by cloud point measurements). Mixed aliphatic/ aromatic resins can be made with varying proportions of petroleum-derived and/or naturally occurring monomers and are typically block co-polymers. Examples of mixed aliphatic/ aromatic resins tackifiers include the family available commercially from Eastman Chemical under the trade name Picco, such as those products identified by the trade designations: AR100 and HM100 and under the trade name Piccotac, such as those products identified by the trade designations: 6095-E, 8090-E, 8100-J and/or 9095.

Particularly preferred tackifying resins suitable for use in the present invention are those available under the following trade designations:
Piccotac 1095-N (aliphatic hydrocarbon resin)
Piccotac 6095-E (aliphatic-Aromatic hydrocarbon resin);
Dercolyte A115 (α pinene terpene resin) and/or
Dercolyte TS105 (terpene stryene resin).

In a yet other aspect of the process of the present invention, in step (a) the mixture may be conveniently formed by mixing a first pre-mixture comprising the amphiphilic stabilising polymer and water with a second pre-mixture comprising the hydrophobic co-stabiliser and the α,β-ethylenically unsaturated monomer(s).

The first pre-mixture may be prepared by adding the amphiphilic stabilising polymer to water, preferably at a temperature from about 0°C to about 100°C, followed by the addition of one or more optional ingredients (as described and in the amounts described herein): such as secondary water soluble monomer(s); pH adjusting compound(s) and/or polymerisation initiator(s).

If the first pre-mixture is prepared using an amphiphilic stabilising polymer comprising carboxylic acid function(s) then pH-adjusting compound(s) may be added to adjust the solubility (as measured at 25 °C) of the amphiphilic polymer in the first pre-mixture (i) to at least about 1x10⁻² g/l, more preferably at least about 1x10⁻¹ g/l, and most preferably at least about 1 g/l. It is preferred to add the pH-adjusting compound to the amphiphilic polymer before the polymer is added to the water and to any optional additional components of the first pre-mixture.

The second pre-mixture may be prepared by adding the desired amount of hydrophobic co-stabiliser to the α,β-ethylenically unsaturated monomer(s), preferably under gentle agitation. It is also preferred to prepare the second pre-mixture at room temperature, more preferably until a clear solution is obtained. Optionally one or more secondary water-soluble monomers (as described herein) and/or a polymerisation initiator may also be added to the second pre-mixture.

The formation of the mixture in step (a) preferably is performed at a temperature of from about 0°C to about 100 °C, preferably at about ambient temperature.

Preferably in step (b) of the process of the invention, the mixture of step (a), is mixed until a mini-emulsion is formed which comprises stabilised droplets having a average diameter from about 10 to about 900 nm, more preferably from about 50 to about 500 nm, .most preferably from about 80 to about 450 nm, for example from about 100 to about 430 nm.

Droplet size was measured herein using samples of the mini-emulsion diluted with deionised water (or preferably with deionised water saturated with the monomer(s) present in the mini-emulsion). Average droplet diameter of the sample was determined directly within 15 minutes using dynamic light scattering, for example on a Coulter^{™} N4 Plus or a Nicomp 380 ZLS device..

In step (b) the mixture is mixed under high stress. Stress is described as force per unit area. One manner in which stress is exerted is by shear. Shear means that the force is such that one layer or plane moves parallel to an adjacent one. Stress can also be exerted from all sides as a bulk, compression stress, such that stress is exerted without almost any shear. Another manner of exerting stress is by cavitation, which occurs when the pressure within a liquid is sufficiently lowered to cause vaporisation. The formation and collapse of the vapour bubbles occurs violently over a short time period and produces intense stress. Another manner of applying stress is the use of ultrasonic energy. It is preferred to use equipment capable of producing localised high shear, preferably along with moderate bulk mixing. More preferably high shear mixing is obtained by using ultrasound treatment, colloid mill and/or homogenizer.

The monomer mini-emulsions may be usefully formed at any temperature between the freezing point and the boiling point of the mixture and the components present therein, preferably from about 20 to about 50° C, more preferably from about 25 to about 40°C, most preferably about ambient temperature.

Step (b) of the process of the invention produces a essentially stable mini-emulsion comprising an aqueous continuous phase and a dispersed phase of droplets which comprise the α,β-ethylenically unsaturated monomer(s) and the hydrophobic co-stabiliser. Without wishing to be bound by any mechanism it is believed that a major part of (preferably substantially all) the amphiphilic stabilising polymer may be located at or near the interface between the dispersed and continuous phase. The solubility of the stabilising polymer in the monomer, when the stabilising polymer is in the deprotonated state, is preferably less than about 2%, more preferably less than about 1%, by weight based on the total weight of monomer.

Essentially stable denotes a mini-emulsion with a shelf life sufficiently long so the monomer(s) dispersed within the emulsion can be polymerised within the droplets before the emulsion destabilises and the phases have had time to separate. Mini-emulsions obtained by the process of the invention generally have a shelf life of more than 24 hrs, often more than several days.

In step (c) of the process of the invention, the monomer(s) within the droplets are polymerised. The monomer(s) is generally polymerised under free radical polymerisation conditions, preferably in the presence of a free radical initiator. The polymerisation initiator may be either a water-soluble or an oil soluble compound. Suitable free radical initiators are well known in the art and comprise (as a non limiting list) for example, organic peroxides such as benzoyl peroxide, lauroyl peroxide, 2,5-dimethyl 2,5-di(2-ethylhexanoylperoxy) hexane and dicumyl peroxide; inorganic persulfates such as potassium, sodium and/or ammonium persulfate; and azo initiators such as azobis-(isobutyro nitrile) (AIBN) and azobis (1-cyclohexanecarbonitrile); and/or redox pairs such as those comprising Fe²⁺/H₂O₂, ROH/Ce⁴⁺ (where R is an organic group such as C₁₋₆alkyl or C₅₋₆aryl) and/or K₂S₂O₈/Fe²⁺; tert. butyl hydroxy peroxide (abbreviated as 't-BHP' and available commercially under the trade names 'Luperox H70' from Arkema or 'Trigonox A-W70' from AkzoNobel), sodium hydroxymethane sulfinate (available commercially under the trade name 'Rongalit C^{®'} from BASF); sodium formaldehyde sulfoxylate (available commercially under the trade name 'Bruggolite FF-6' from Brueggeman Chemical); any paired with for example ascorbic acid and/or one or more bisulfites.

The optional polymerisation initiator(s) which may also be added to the first and/or second pre-mixture(s) formed in step (a) may also be selected from those listed herein.

The free-radical initiator may be added after, before and/or during step (b). Where optional first and second pre-mixtures are prepared in step (a) and the solubility of the initiator in the second pre-mixture is higher than in the first, the initiator is preferably added to the second pre-mixture. However if the initiator is more soluble in the first pre-mixture, it is preferred to add the initiator at the end of step (a) after the mixture has been formed or more preferably to the mini-emulsion obtained at the end of step (b).

During the polymerisation step (c) of the invention, to keep the stabilising polymer in an amphiphilic state it may be necessary to add further pH adjusting compound as described for step (a), especially where pH drops during polymerisation. Such a drop in pH may be caused by the dissociation of persulfate initiators (for example ammonium persulfate) and/or as any pH adjusting compound already present in the mixture evaporates (for example when ammonia is used). The pH-adjusting compound(s) added during step (c) may be the same or different to any added during step (a).

The polymerisation of step (c) may be carried out over a broad temperature range depending on the choice of initiator, preferably from about 20 to about 90 °C, more preferably from about 25 to about 80 °C, for example about 70°C.

The polymerisation of step (c) is usually conducted over a period from about 10 min to about 24 hrs, more usually from about 2 to about 10 hours, most usually from about 4 to about 6 hours..

The present invention also relates to an aqueous polymer dispersion (also referred to herein as a polymer emulsion, mini-emulsion and/or polymer latex) obtained and/or obtainable by the processes of the invention as described herein, and to (dry) polymers collectable from such dispersions.

The aqueous polymer dispersion of invention may comprise polymer particles having an average diameter approximately the same as the average size of the droplets in the mini-emulsions from which they were formed.

Preferred polymer lattices of the invention have an average diameter from about 10 to about 900 manometers, more preferably from about 50 to about 500 nm, .most preferably from about 50 to about 400 nm, for example from about 80 to about 350 nm.

Preferred aqueous polymer dispersions of the invention have a solids contents from about 25% to about 60%, more preferably from about 28% to about 50% by weight of the dispersion.

### Monomer composition

Optionally the core and/or shell polymers of the present invention may be obtained form a monomer composition comprising: (i) at least one hydrophobic monomer (Component I), (ii) at least one hydrophilic monomer (Component II); (iii) at least one partially hydrophilic monomer (Component III); (iv) optionally at least one a monomer of Formula 4 (Component IV) 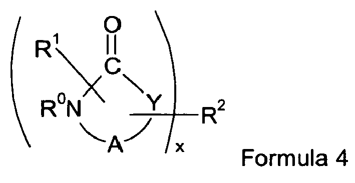 where:
Y denotes an electronegative group,
R⁰ is H, OH or an optionally hydroxy substituted C₁₋₁₀hydrocarbo
R¹ is H or a C₁₋₁₀hydrocarbo;
R² is a C₁₋₁₀hydrocarbo group substituted by at least one activated unsaturated moiety; and
A either represents a divalent organo moiety attached to both the HN and Y moieties so the A, NH, C=O and Y moieties together represent a ring having from 4 to 8 ring atoms, and R¹ and R² are attached to any suitable point on the ring; or
A is not present (i.e. Formula 4 is linear and/or branched does not contain a heterocyclic ring) in which case R¹ and R² are attached to the R⁰ moiety,
x is an integer from 1 to 4;

Unless otherwise indicated (e.g. for amounts of aryl arylalkylene within Component I) all of the weight amounts described herein for the following monomers are given as weight percentages by the total weight of monomers (Components I, II, III & IV).

### Component I

The hydrophobic monomer (Component I) may comprise, conveniently consist essentially of, at least one hydrophobic polymer precursor comprising at least one activated unsaturated moiety (conveniently at least one hydrophobic (meth)acrylate monomer) and/or arylalkylene polymer precursor.

Preferably the hydrophobic (meth)acrylate comprises C_{>4}hydrocarbo (meth)acrylate(s) and conveniently the C_{>4}hydrocarbo moiety may be C₄₋₂₀hydrocarbyl, more conveniently C₄₋₁₄alkyl most conveniently C₄₋₁₀alkyl, for example C₄₋₈alkyl.

Suitable hydrophobic (meth)acrylate(s) are selected from: isooctyl acrylate, 4-methyl-2-pentyl acrylate, 2-methylbutyl acrylate, isoamyl acrylate, sec-butyl acrylate, n-butyl acrylate, 2-ethylhexyl acrylate, isodecyl methacrylate, isononyl acrylate, isodecyl acrylate, and/or mixtures thereof, especially 2-ethylhexyl acrylate and/or n-butyl acrylate, for example 2-ethylhexyl acrylate.

Preferably the arylalkylene comprises (optionally hydrocarbo substituted) stryene and conveniently the optional hydrocarbo may be C₁₋₁₀hydrocarbyl, more conveniently C₁₋₄alkyl.

Suitable arylalkylene monomers are selected from: styrene, α-methyl styrene, vinyl toluene, t-butyl styrene, di-methyl styrene and/or mixtures thereof, especially styrene.

The arylalkylene monomer may be present in Component I (the total hydrophobic monomer) up to about 30%, preferably from about 1% to about 20%, and more preferably from about 5% to about 15% by total weight of Component I.

The currently preferred Component I is a mixture of 2-ethylhexyl acrylate and/or n-butyl acrylate with styrene, more preferably a mixture of 2-ethylhexyl acrylate and stryene.

Component I may be present in a total amount from about 70% to about 90%, preferably from about 75% to about 85% by weight.

### Component II

Suitable hydrophilic polymer precursors of Component II are those that are co-polymerisible with the hydrophobic polymer precursors(s) of Component I and are water soluble. Conveniently the at least one hydrophobic polymer precursor may comprise at least one activated unsaturated moiety.

Preferred hydrophilic monomers comprise, advantageously consist essentially of, at least one ethylenically unsaturated carboxylic acid. More preferred acids have one ethylenic group and one or two carboxy groups. Most preferably the acid(s) are selected from the group consisting of: acrylic acid (and oligomers thereof), beta carboxy ethyl acrylate, citraconic acid, crotonic acid, fumaric acid, itaconic acid, maleic acid, methacrylic acid and mixtures thereof; for example acrylic acid, methacrylic acid, beta carboxy ethyl acrylate and mixtures thereof.

The currently preferred Component II is a mixture of beta carboxy ethyl acrylate and acrylic acid.

Component II may be present in a total amount of at least about 1%, preferably from about 2% to about 10%, more preferably from about 3% to about 9%, most preferably from about 4% to about 8% by weight.

### Component III

The partially hydrophilic polymer precursor(s) of Component III may also be referred to as partially water soluble monomers and conveniently may comprise at least one activated unsaturated moiety..

Preferred partially hydrophilic monomers comprise, conveniently consist essentially of, at least one C₁₋₂alkyl (meth)acrylate. More preferred partially hydrophilic monomers are selected from the group consisting of: methyl acrylate, methyl methacrylate, ethyl acrylate and mixtures thereof; most preferably ethyl acrylate, methyl methacrylate, and mixtures thereof, for example ethyl acrylate.

The currently preferred Component III is ethyl acrylate.

Component II may be present in a total amount of up to 10%, preferably from about 0.1 % to about 5%, more preferably from about 0.1 % to about 3%, most preferably from about 0.5% to about 2.5% by weight.

### Component IV

Component IV comprises, conveniently consists essentially of, at least one monomer of Formula 4 as defined herein.

### Formula 4

The ring moiet(ies) of Formula 4 are each attached to R² and in Formula 4 when x is 2, 3 or 4 then R² is multi-valent (depending on the value of x). If x is not 1 R¹ and Y may respectively denote the same or different moieties in each ring, preferably the same respective moieties in each ring. R¹ and R² may be attached at any suitable position on the ring.

Preferred monomers of Formula 4 comprise, conveniently consist essentially of, those where:
A represents a optional substituted divalent C₁₋₅hydrocarbylene; and
Y is divalent NR' (where R' is H, OH, optionally hydroxy substituted C₁₋₁₀hydrocarbo or R²) or divalent O,

More preferred monomers of Formula 4 comprise those where:
x is 1 or 2
Y is NR² (i.e. where Formula 1 is attached to R² via a ring nitrogen)
A represents a divalent C₁₋₃hydrocarbylene;
R⁰ is H,
R¹ is a C₁₋₁₀hydrocarbo; and
R² comprises a (meth)acryloxyhydrocarbo group or derivative thereof (e.g. maleic anhydride); and

Most preferred monomers of Formula 4 comprise those where:
x is 1, or 2 and the (optionally repeating) unit in Formula 1 is represented by Formula 6 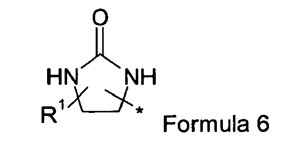 where the asterisk denotes the point of attachment of Formula 6 to R² (which may be at any suitable point on the ring preferably via a ring nitrogen); and
R¹ is H or C₁₋₈hydrocarbyl
R² comprises a (meth)acryloxyC₁₋₁₀hydrocarbo group.

More preferred monomers of Formula 4 comprise: 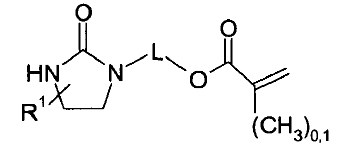 where R¹ is H or C₁₋₆alkyl and L is a suitable divalent organo linking group (such as C₁₋₁₀hydrocarbylene, for example C₁₋₆alkylene).

Further suitable uredo monomers of Formula 4 are described in "Novel wet adhesion monomers for use in latex paints" Singh et al, Progress in Organic Coatings, 34 (1998), 214-219, (see especially sections 2.2 & 2.3) and EP 0629672 (National Starch) both of which are hereby incorporated by reference.

Examples of monomers of Formula 4 are selected from: 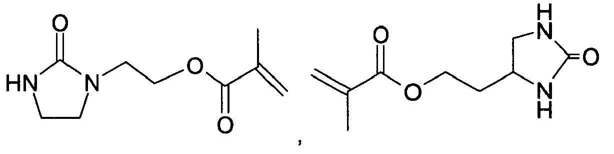 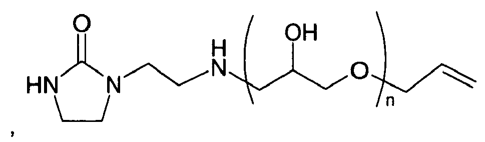 (where n is 1 to 4), 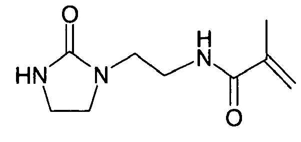 (available commercially from Atofina under the trade mark Sipomer^{®} WAM II) and suitable mixtures thereof.

In the same and/or another embodiment of the invention monomers as described in US 6,166,220 (Cytec Technology Corporation, the disclosure of which is hereby incorporated by reference) may used to comprise all or part of Component IV and/or Formula 4 herein and/or may also be incorporated in the formulations of the invention. Preferably such monomers are represented by formula "B(C=O)Y(C=O)A" on col. 2 line 25 of US 6,166,220 (where B, Y and A are as described therein). Such monomers may be available commercially from Cytec under registered trade mark Cylink^{®}. Examples of suitable such monomers are those available under the following trade designations: Cylink^{®} NMA and/or NMA-LF (self cross-linking monomers), Cylink® IBMA (an isobutoxy derivative of Cylink^{®} NMA), Cylink^{®} MBA; Cylink^{®} NBMA, Cylink^{®} TAC and/or Cylink^{®} C4 (a wet adhesion monomer).

Conveniently Component IV may be used as a substantially pure compound (or mixture of compounds) of Formula 1 or may be dissolved in a suitable solvent such as a suitable (meth)acrylate or acrylic derivative for example methyl methacrylate. Optionally such solutions may comprise from about 50% to about 75% by weight of Component IV.

Component IV may be present in a total amount from at least about 0.1%, preferably from about 0.1 % to about 2.0%, more preferably from about 0.2% to about 1.0%, most preferably from about 0.3% to about 0.6% by weight.

### Activated unsaturated moiety

The term "activated unsaturated moiety", is used herein (for example for R² in Formula 4) to denote a species comprising at least one unsaturated carbon to carbon double bond in chemical proximity to at least one activating moiety. Preferably the activating moiety comprises any group which activates an ethylenically unsaturated double bond for addition thereon by a suitable electrophillic group. Conveniently the activating moiety comprises oxy, thio, (optionally organo substituted)amino, thiocarbonyl and/or carbonyl groups (the latter two groups optionally substituted by thio, oxy or (optionally organo substituted) amino). More convenient activating moieties are (thio)ether, (thio)ester and/or (thio)amide moiet(ies). Most convenient "activated unsaturated moieties" comprise an "unsaturated ester moiety" which denotes an organo species comprising one or more "hydrocarbylidenyl(thio)carbonyl(thio)oxy" and/or one or more "hydrocarbylidenyl(thio)- carbonyl(organo)amino" groups and/or analogous and/or derived moieties for example moieties comprising (meth)acrylate functionalities and/or derivatives thereof. "Unsaturated ester moieties" may optionally comprise optionally substituted generic α,β-unsaturated acids, esters and/or other derivatives thereof including thio derivatives and analogs thereof.

Preferred activated unsaturated moieties are those represented by a radical of Formula 5. 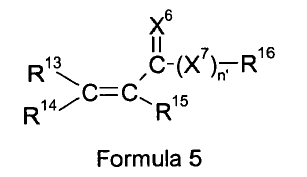 where n' is 0 or 1, X⁶ is oxy or, thio; X⁷ is oxy, thio or NR¹⁷ (where R¹⁷ represents H or optionally substituted organo), R¹³, R¹⁴ , R¹⁵ and R¹⁶ each independently represent a bond to another moiety in Formula 1, H, optional substituent and/or optionally substituted organo groups, where optionally any of R¹³, R¹⁴, R¹⁵ and R¹⁶ may be linked to form a ring; where at least one of R¹³, R¹⁴, R¹⁵ and R¹⁶ is a bond; and all suitable isomers thereof, combinations thereof on the same species and/or mixtures thereof.

The terms "activated unsaturated moiety"; "unsaturated ester moiety" and/or Formula 5 herein represents part of a formula herein and as used herein these terms denote a radical moiety which depending where the moiety is located in the formula may be monovalent or multivalent (e.g. divalent). Thus for example in Formula 4 it will be appreciated that at least one of R¹³, R¹⁴, R¹⁵ and R¹⁶ denote a single covalent bond i.e. denote where Formula 5 is attached to the remainder of Formula 4.

More preferred moieties of Formula 5 (including isomers and mixtures thereof) are those where n' is 1; X⁶ is O; X⁷ is O, S or NR⁷.

R¹³, R¹⁴, R¹⁵ and R¹⁶ are independently selected from: a bond, H, optional substituents and optionally substituted C₁₋₁₀hydrocarbo, optionally R¹⁵ and R¹⁶ may be linked to form (together with the moieties to which they are attached) a ring; and where present R¹⁷ is selected from H and optionally substituted C₁₋₁₀hydrocarbo.

Most preferably n' is 1, X⁶ is O; X⁷ is O or S and R¹³, R¹⁴, R¹⁵ and R¹⁶ are independently a bond, H, hydroxy and/or optionally substituted C₁₋₆hydrocarbyl.

For example n' is 1, X⁶ and X⁷ are both O; and R³, R⁴, R⁵ and R⁶ are independently a bond, H, OH, and/or C₁₋₄alkyl; or optionally R⁵ and R⁶ may together form a divalent C₀₋₄alkylenecarbonylC₀₋₄alkylene moiety so Formula 5 represents a cyclic anhydride (e.g. when R¹⁵ and R¹⁶ together are carbonyl then Formula 5 represents a maleic anhydride or derivative thereof).

For moieties of Formula 5 where n' is 1 and X⁶ and X⁷ are both O then when one of (R¹³ and R¹⁴) is H and also R¹³ is H, Formula 5 represents an acrylate moiety, which includes acrylates (when both R¹³ and R¹⁴ are H) and derivatives thereof (when either R¹³ and R¹⁴ is not H). Similarly when one of (R¹³ and R¹⁴) is H and also R¹⁵ is CH₃, Formula 5 represents an methacrylate moiety, which includes methacrylates (when both R¹³ and R¹⁴ are H) and derivatives thereof (when either R¹³ and R¹⁴ is not H). Acrylate and/or methacrylate moieties of Formula 5 are particularly preferred.

Conveniently moieties of Formula 5 are those where n' is 1; X⁶ and X⁷ are both O; R¹³ and R¹⁴ are independently a bond, H, CH₃ or OH, and R¹⁵ is H or CH₃; R¹⁶ is H or R¹⁵ and R¹⁶ together are a divalent C=O group.

More conveniently moieties of Formula 5 are those where n' is 1; X⁶ and X⁷ are both O; R¹³ is OH, R⁴ is CH₃, and R¹⁵ is H and R⁶ is a bond and/or tautomer(s) thereof (for example of an acetoacetoxy functional species).

Most convenient unsaturated ester moieties are selected from: -OCO-CH=CH₂; -OCO-C(CH₃)=CH₂; acetoacetoxy, -OCOCH=C(CH₃)(OH) and all suitable tautomer(s) thereof.

It will be appreciated that any suitable moieties represented by Formula 5 could be used in the context of this invention such as other reactive moieties.

### General

The terms 'optional substituent' and/or 'optionally substituted' as used herein (unless followed by a list of other substituents) signifies the one or more of following groups (or substitution by these groups): carboxy, sulpho, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl, halo, trihalomethyl and/or methoxy.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur. Convenient phosphorous containing groups may comprise: phosphinyl (i.e. a '-PR₃' radical where R independently denotes H or hydrocarbyl); phosphinic acid group(s) (i.e. a '-P(=O)(OH)₂' radical); and phosphonic acid group(s) (i.e. a '-P(=O)(OH)₃' radical).

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub-set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene).

Hydrocarbylidyne groups comprise trivalent groups (which may be represented by "RC≡"), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

Some of the formulae and moieties described herein comprise poly hetero-organo preferably polyoxyhydrocarbylene; more preferably polyoxyalkylene, repeat units that for example can comprise suitable unsubstituted or substituted alkylene groups such as ethylene, propylene, butylene, and isobutylene. It will be appreciated that in this context term multiple repeat units indicates that such moieties described and represented herein may comprise the same and/or different repeat units occurring singly and/or multiple times to represent homo-, block and/or random polymeric moieties and/or any suitable mixtures thereof.

As used herein chemical terms (other than IUAPC names for specifically identified compounds) which comprise features which are given in parentheses - such as (alkyl)acrylate, (meth)acrylate and/or (co)polymer - denote that that part in parentheses is optional as the context dictates, so for example the term (meth)acrylate denotes both methacrylate and acrylate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, π-adducts, solvates and/or hydrates); isotopically substituted forms, polymeric configurations [such as homo or copolymers, random, graft and/or block polymers, linear and/or branched polymers (e.g. star and/or side branched), cross-linked and/or networked polymers, polymers obtainable from di and/or tri-valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

Polymers of the present invention may be prepared by one or more suitable polymer precursor(s) which may be organic and/or inorganic and comprise any suitable (co)monomer(s), (co)polymer(s) [including homopolymer(s)] and mixtures thereof which comprise moieties which are capable of forming a bond with the or each polymer precursor(s) to provide chain extension and/or cross-linking with another of the or each polymer precursor(s) via direct bond(s) as indicated herein.

Polymer precursors of the invention may comprise one or more monomer(s), oligomer(s), polymer(s); mixtures thereof and/or combinations thereof which have suitable polymerisible functionality.

A monomer is a substantially monodisperse compound of a low molecular weight (for example less than one thousand daltons) which is capable of being polymerised.

A polymer is a polydisperse mixture of macromolecules of large molecular weight (for example many thousands of daltons) prepared by a polymerisation method, where the macromolecules comprises the multiple repetition of smaller units (which may themselves be monomers, oligomers and/or polymers) and where (unless properties are critically dependent on fine details of the molecular structure) the addition or removal one or a few of the units has a negligible effect on the properties of the macromolecule.

A oligomer is a polydisperse mixture of molecules having an intermediate molecular weight between a monomer and polymer, the molecules comprising a small plurality of monomer units the removal of one or a few of which would significantly vary the properties of the molecule.

Depending on the context the term polymer may or may not encompass oligomer.

The polymer precursor of and/or used in the invention may be prepared by direct synthesis or (if the polymeric precursor is itself polymeric) by polymerisation. If a polymerisible polymer is itself used as a polymer precursor of and/or used in the invention it is preferred that such a polymer precursor has a low polydispersity, more preferably is substantially monodisperse, to minimise the side reactions, number of by-products and/or polydispersity in any polymeric material formed from this polymer precursor. The polymer precursor(s) may be substantially un-reactive at normal temperatures and pressures.

Except where indicated herein polymers and/or polymeric polymer precursors of and/or used in the invention can be (co)polymerised by any suitable means of polymerisation well known to those skilled in the art. Examples of suitable methods comprise: thermal initiation; chemical initiation by adding suitable agents; catalysis; and/or initiation using an optional initiator followed by irradiation, for example with electromagnetic radiation (photo-chemical initiation) at a suitable wavelength such as UV; and/or with other types of radiation such as electron beams, alpha particles, neutrons and/or other particles.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross-linking with such other resins as appropriate.

### Particle size

The applicant has surprisingly found that the PSAs of the invention can be made with a larger particle size than previously thought necessary for water whitening resistance and the PSA still retains acceptable resistance to water whitening. There are process advantages in using a larger particle size (e.g. reduced viscosity) so in a preferred embodiment of the invention the particle size of the PSA is more than 100 nm, conveniently from about 100 nm to about 400 nm, more conveniently from about 200 nm to about 300 nm. The particle sizes herein are number average which may be measured by any suitable method such as light scattering.

### Other components

In compositions of the invention the stabiliser selected for the polymerization is substantially free of alkyl phenol ethoxylates (APEO) which are undesired for environment reasons. Yet stable operating conditions are still achieved with a stable pre-emulsion and low polymer grits in the final polymer emulsion and good water whitening resistance of the PSA when applied as coating.

The final emulsion of the invention is shear stable under a defined range of shear rates. For example when subject to a 150,000 s⁻¹ high shear field (Haake) the latex remains stable. The shear stability can be increased still further by selecting further suitable additives (such as additional stabilisers, defoamer and/or rheological modifier) to further control the colloidal stability and rheology of the dispersion provided these do not adversely effect the desired properties of the adhesive.

The process(es) of the invention also utilizes at least one water-soluble polymerization initiator. Any conventional water-soluble polymerization initiator that is normally acceptable for emulsion polymerization of acrylate monomers may be used and such polymerization initiators are well known in the art. The typical concentration of water-soluble polymerization initiators is about 0.01 wt. % to about 1 wt. %, preferably about 0.01 wt. % to about 0.5 wt. %, of the total weight of monomers charged in the pre-emulsion. The water soluble polymerization initiators can be used alone or used in combination with one or more conventional reducing agents, such as bisulfites, metabisulfites, ascorbic acid, sodium formaldehyde sulfoxylate, ferrous sulfate, ferrous ammonium sulfate, ferric ethylenediamine-tetraacetic acid, and the like. Water-soluble polymerization initiators that can be employed according to the invention include water soluble persulfates, peroxides, azo compounds and the like, and mixtures thereof. Examples of water soluble initiators include, but are not limited to, persulfates (e.g. potassium persulfate, and sodium persulfate), peroxides (e.g. hydrogen peroxide, and tert-butyl hydroperoxide), and azo compounds (e.g. 4,4'-azobis(4-cyano-pentanoic acid), V-501 from Wako Chemicals). Currently the preferred water soluble polymerization initiators are the persulfates, particularly potassium or sodium persulfates.

The amount of water-soluble or water-dispersible stabiliser added to the mixture of water, monomers and polymerization initiator is that amount effective to produce a latex emulsion having particles having an average particle size described herein. The effective amount needed to obtain the required particle size will be dependent on operating conditions known in the art to have an affect on particle size, including agitation (shear), viscosity, and the like. The remaining stabiliser can be added at the beginning of the polymerisation, to form a pre emulsion, in batches during polymerisation and/or with monomers.

The polymerization can be initiated by any conventional method known to those skilled in the art, such as by application of heat or radiation, though heat is preferred. The method of initiation will be dependent on the water-soluble polymerization initiator used and will be readily apparent to those skilled in the art.

A water soluble polymerization initiator can be added to the polymerization reaction in any conventional manner known in the art. It is currently preferred to add a portion of the initiator to the initial reactor charge which comprises water, an effective amount of the water-soluble or water-dispersible stabiliser, and an initial amount of the polymerization initiator. The remainder of the initiator can be added continuously or incrementally during the emulsion polymerization. It is currently preferred to incrementally add the remaining initiator.

Following polymerization, the pH of the latex emulsion is preferably adjusted by contacting the latex emulsion with a suitable base in an amount necessary to raise the pH to about 5.5 to about 9, more preferably from about 6.5 to about 8 most preferably about 7 to about 8. Examples of suitable bases for adjusting the pH of the latex emulsion include alkali metal hydroxides, alkaline earth metal hydroxides, ammonium hydroxide, amines, and the like, and mixtures thereof. The currently preferred base for use in the invention is ammonium hydroxide.

The polymerization reaction can be conducted in any conventional reaction vessel capable of an emulsion polymerization. The polymerization can be conducted at a temperature typical for emulsion polymerizations. The polymerization is preferably conducted at a temperature in the range of about 50°C to about 95°C, preferably in the range of about 60°C to about 85°C.

The polymerization time is that time needed to achieve the desired conversion based on the other reaction conditions, e.g. temperature profile, and reaction components, e.g. monomers, initiator, etc. The polymerization time will be readily apparent to those skilled in the art.

Many other variations embodiments of the invention will be apparent to those skilled in the art and such variations are contemplated within the broad scope of the present invention.

Unless the context clearly indicates otherwise, as used herein plural forms of the terms herein are to be construed as including the singular form and vice versa.

The term "comprising" as used herein will be understood to mean that the list following is non-exhaustive and may or may not include any other additional suitable items, for example one or more further feature(s), component(s), ingredient(s) and/or substituent(s) as appropriate.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

It will be appreciated that a wide variety of other embodiments of the invention may be prepared depending on the end properties desired in the PSA. For example the following parameters may be varied during synthesis:
variation of molecular weight distribution (*MWD*) of the core polymer optionally keeping the MWD of the shell polymer constant or vice versa (varying the *MWD* of the core polymer optionally keeping the MWD of the shell polymer constant)
variation of the glass transition temperature (*T_{g}*) of the shell polymer(s) optionally
keeping the *T_{g}* of the core polymer(s) constant.

Further aspects of the present invention are given in the claims.

### Figures

The invention is illustrated by the following non-limiting figures where::
Figure 1 illustrates schematically a first stage of one embodiment for the process of the present invention for producing heterogeneous particles (such as those having a core shell structure) by emulsion polymerization
Figure 2 illustrates a second stage of one embodiment for the process of the present invention (following the first stage shown in Figure 1)
Figure 3 illustrates a third final stage of one embodiment for the process of the present invention (following second stage shown in Figure 2)
Figure 4 illustrates the structure of a tackified PSA film produced from a polymer prepared by the polymerisation shown in Figures 1 to 3

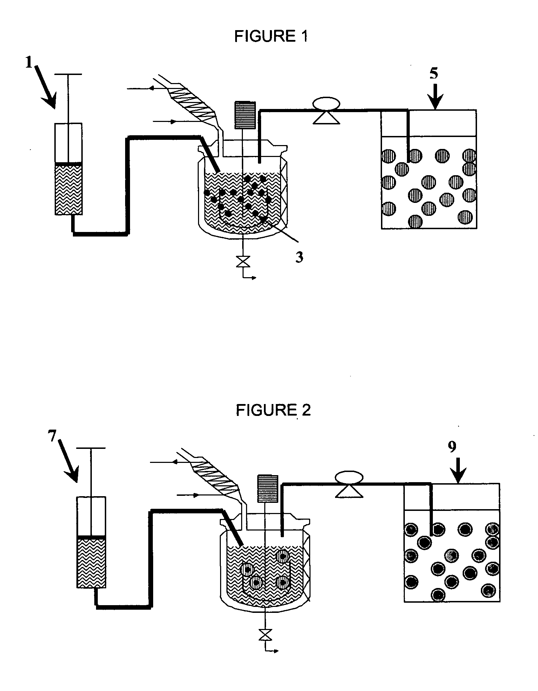

In Figure 1 the following labels are used: "1" denotes generally the vessel containing the initiator; "3" denotes generally the vessel containing the seed and water; and "5" denotes generally the vessel containing the core monomer, stabiliser and water.
In Figure 2: the following labels are used: "7" denotes generally the vessel containing the initiator (which may be the same as "1" in Figure 1); and "9" denotes generally the vessel containing the shell monomer, stabiliser and water.

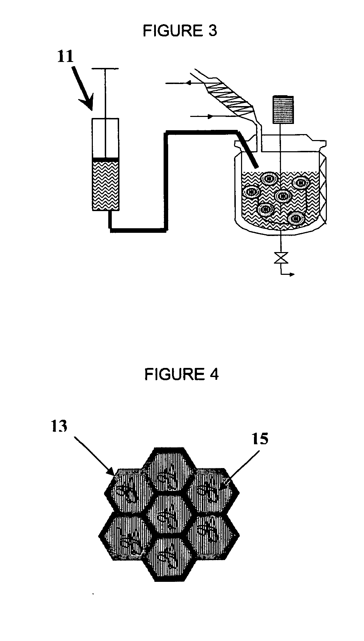

In Figure 3 the following label is used: "11" denotes generally the vessel containing the monomer chasing ingredients
In Figure 4 the following labels are used: "13" denotes generally the "shell" cohesive zone of the PSA film comprising cross-linkable species ; and "15" denotes generally the "core" dissipative zone in the film comprising a hybrid polymer of a tackifer resin and acrylic copolymer.

### Examples

The present invention will now be described in detail with reference to the following non limiting examples and standard method(s) which are by way of illustration only.

Various registered trademarks, other designations and/or abbreviations are used herein to denote some of ingredients used to prepare polymers and compositions of the invention. These are identified in the table below by chemical name and/or trade-name and optionally their manufacturer or supplier from whom they are available commercially. However where a chemical name and/or supplier of a material described herein is not given it may easily be found, e.g. in 'McCutcheon's Emulsifiers and Detergents', Rock Road, Glen Rock, N.J. 07452-1700, USA, 1997 and/or Hawley's Condensed Chemical Dictionary (14th Edition) by Lewis, Richard J., Sr.; John Wiley & Sons.

### 'AA' denotes acrylic acid (CH₂=CHCO₂H).

'Acticide MBS' (also known herein as 'MBS') is the trade name of a biocide from Thor GmbH which contains the active ingredients 2-methyl-2H-isothiazolin-3-one 1,2-benzisothiazolin-3(2H)-one.
'B3MP' denotes the chain transfer agent tributyl mercapto propionate
'BA' denotes butyl acrylate
'CEA' denotes beta carboxy ethyl acrylate (β-CEA) an oligomer formed from AA and which is available commercially from Rhodia under the trade name Sipomer
'DAAM' denotes the cross-linkable monomer diacetone acrylamide
'DDCM' denotes the chain transfer agent n-dodecyl mercaptan.
'EA' denotes ethyl acrylate.
'EHA' denotes 2-ethyl hydroxy acrylate
'EO' denotes ethoxy (e.g. repeat unit in a polyether moiety).
'H₂O (DM)' denotes demineralised water
'HBA' denotes hydroxy butyl acrylate
'MA' denotes methyl acrylate.
'MAA' denotes methacrylic acid ( CH₂=C(CH₃)CO₂H ).
'Norsocryl^{®} 100' (also denoted 'N100' herein) is a monomer which is a solution of 2-(2-oxoimidazolidin-1-yl) ethyl methacrylate (MEIO) in methyl methacrylate (MMA, 75% by weight) that is available commercially under that trade name from Arkema
'Piccotac 1095-N is a trade name of a tackifier available commercially from Eastman Chemical which is an aliphatic hydrocarbon resin tackifiers formed from C₅piperylene feedstock
'Rhodacal DS-4' (also known herein as 'DS4') denotes, the anionic surfactant available commercially from Rhodia under this trade name as an aqueous dispersion of 23% total solids by weight of sodium dodoecyl benzene sulfonate (SDBS), branched.
'Rhodapex^{®} AB-20' (also known herein as 'AB-20') denotes, the anionic surfactant available commercially from Rhodia under this trade name which is an aqueous dispersion of 30% total solids by weight of an of the ammonium salt of a fatty alcohol ether sulfate, (number of EO repeat units 9, alkyl radical: C₁₂₋₁₈).
'Rongalit C^{®'} (also known herein as 'Ron-C') is the trade name of the polymerisation initiator which is sodium hydroxymethanesulfinate available commercially from BASF.
'SM' denotes stearyl methacrylate
'STY' denotes stryene
't-BHP' denotes tert. butyl hydroxy peroxide commercially available for example as 70% t-BHP in 30% water under the trade designations Luperox H70 or Trigonox A-W70 (respectively from Arkema or AkzoNobel)
'Ufapol® DMA PS2' (also known herein as 'PS2') denotes the surfactant available commercially from Unger under this trade name, which is an aqueous solution of an optimized combination of mono- and di-alkyl disulphonated diphenyloxide, disodium salt.

The ingredients used to prepare Examples 1 and 2 of the invention are shown below in Tables 1 and 2 respectively. These examples were prepared by the method described after the tables.

### Example 1

**Table 1**

| Ingredients (cont^{d}) | | | Amount (g) | | wt:% on monomer | |
|---|---|---|---|---|---|---|
| | | | Reactor | Pre-emulsion | Total | Active |
| A | 1 | H₂O(DM) | 178.500 | | 19.833 | 0.000 |
| A | 2 | H₂O(DM) | 9.891 | | 1.099 | 0.000 |
| A | 3 | (NH₄)₂S₂O₈ | 0.621 | | 0.069 | 0.069 |
| A | 4 | H₂O(DM) | 18.315 | | 2.035 | 0.000 |
| A | 5 | (NH₄)₂S₂O₈ | 2.151 | | 0.239 | 0.239 |
| A | 6 | H₂O(DM) | | 637.000 | 70.778 | 0.000 |
| A | 7 | Na₂CO₃ | | 1.738 | 0.193 | 0.193 |
| A | 8 | DS-4 | | 14.070 | 1.563 | 0.469 |
| A | 9 | PS-2 | | 7.650 | 0.850 | 0.340 |
| A | 10 | AB-20 | | 4.440 | 0.493 | 0.113 |
| B | 11 | DDCM | | 0.244 | 0.027 | 0.027 |
| B | 12 | EHA | | 513.200 | 57.022 | 57.022 |
| B | 13 | AA | | 19.400 | 2.156 | 2.156 |
| B | 14 | CEA | | 11.700 | 1.300 | 1.300 |
| B | 15 | EA | | 116.600 | 12.956 | 12.956 |
| B | 16 | STY | | 38.900 | 4.322 | 4.322 |
| B | 17 | BA | | 77.800 | 8.644 | 8.644 |
| B | 18 | SM | | 32.400 | 3.600 | 3.600 |
| B | 19 | Piccotac 1095-N | | 108.000 | 12.000 | 12.000 |
| C | 20 | H₂O (DM) | | 30.000 | 3.333 | 0.000 |
| C | 21 | AB-20 | | 1.552 | 0.172 | 0.052 |
| C | 22 | PS-2 | | 0.844 | 0.094 | 0.038 |
| C | 23 | DS-4 | | 0.490 | 0.054 | 0.013 |
| D | 24 | EHA | | 24.300 | 2.700 | 2.700 |
| D | 25 | STY | | 7.200 | 0.800 | 0.800 |
| D | 26 | MAA | | 13.500 | 1.500 | 1.500 |
| D | 27 | BA | | 18.000 | 2.000 | 2.000 |
| D | 28 | DAAM | | 27.000 | 3.000 | 3.000 |
| D | 29 | B3MP | | 1.251 | 0.139 | 0.139 |
| E | 30 | Fe(NO₃)₃/10% | 0.040 | | 0.004 | 0.000 |
| E | 31 | t-BHP | 4.140 | | 0.460 | 0.046 |
| E | 32 | Ron-C | 8.280 | | 0.920 | 0.046 |
| E | 33 | MBS | 3.800 | | 0.422 | 0.042 |

### Example 2

| Ingredients | | | Amount (g) | | wt:% on monomer | |
|---|---|---|---|---|---|---|
| | | | Reactor | Pre-emulsion | Total | Active |
| A | 1 | H₂O(DM) | 169.650 | | 18.850 | 0.000 |
| A | 2 | H₂O(DM) | 9.891 | | 1.099 | 0.000 |
| A | 3 | (NH₄)₂S₂O₈ | 0.621 | | 0.069 | 0.069 |
| A | 4 | H₂O(DM) | 18.315 | | 2.035 | 0.000 |
| A | 5 | (NH₄)₂S₂O₈ | 2.151 | | 0.239 | 0.239 |
| A | 6 | H₂O(DM) | | 578.250 | 64.249 | 0.000 |
| A | 7 | Na₂CO₃ | | 1.647 | 0.183 | 0.183 |
| A | 8 | AB-20 | | 28.410 | 3.157 | 0.947 |
| A | 9 | PS-2 | | 15.460 | 1.718 | 0.687 |
| A | 10 | Isopropanol | | 6.180 | 0.687 | 0.000 |
| A | 11 | DS-4 | | 8.960 | 0.996 | 0.229 |
| B | 12 | DDCM | | 0.396 | 0.044 | 0.044 |
| B | 13 | EHA | | 613.150 | 68.127 | 68.127 |
| B | 14 | STY | | 16.900 | 1.878 | 1.878 |
| B | 15 | EA | | 46.310 | 5.145 | 5.145 |
| B | 16 | MA | | 46.310 | 5.145 | 5.145 |
| B | 17 | MAA | | 9.450 | 1.050 | 1.050 |
| B | 18 | AA | | 3.150 | 0.350 | 0.350 |
| B | 19 | N-100 | | 16.950 | 1.883 | 1.883 |
| B | 20 | HBA | | 25.380 | 2.820 | 2.820 |
| B | 21 | Piccotac 1095-N | | 72.000 | 8.000 | 8.000 |
| B | 22 | SM | | 32.400 | 3.600 | 3.600 |
| C | 23 | H₂O (DM) | | 47.133 | 5.237 | 0.000 |
| C | 24 | AB-20 | | 2.460 | 0.273 | 0.082 |
| C | 25 | PS-2 | | 1.350 | 0.150 | 0.060 |
| C | 26 | DS-4 | | 0.783 | 0.087 | 0.020 |
| D | 27 | DDCM | | 0.072 | 0.008 | 0.008 |
| D | 28 | EHA | | 70.780 | 7.864 | 7.864 |
| D | 29 | STY | | 1.950 | 0.217 | 0.217 |
| D | 30 | EA | | 5.350 | 0.594 | 0.594 |
| D | 31 | MA | | 5.350 | 0.594 | 0.594 |
| D | 32 | MAA | | 1.090 | 0.121 | 0.121 |
| D | 33 | AA | | 0.360 | 0.040 | 0.040 |

### Method using to prepare Examples 1 and 2:

### (a)(i) Preparing a first pre-mixture: Mini-emulsion

The surfactant solution (25% w/w), demineralised water and buffer (those ingredient denoted in the Tables 1 & 2 by the label 'A') are mixed to form a homogeneous aqueous 'Solution A'. An organic phase is also prepared by mixing the monomers and the hydrophobic compounds (those ingredients denoted in the Tables 1 & 2 by the label 'B') to form 'Solution B'. The Solutions 'A' and 'B' are then mixed to form a thick, white-pre-emulsion which is then subject to high stress by treating with ultrasound for 10 minutes (using the ultrasound device available commercially under the trade designation Branson Sonifier 450 with the output control set at 8 and a duty cycle of 90%). The resulting mini-emulsion has a droplet size of approximately 191 nm in both examples.

### (a)(ii) Preparing a second pre-mixture: pre-emulsion

A second pre-emusion is prepared. An aqueous solution comprising deionised water and more surfactant is prepared as 'Solution C' and an organic phase comprising the monomers is prepared as 'Solution D' by mixing the ingredients denoted in the respective tables by the respective labels 'C' and 'D'. Solutions C and D are then mixed to form a white pre-emulsion.

### (b) Polymerising the monomers:

The reactor is charged with de-ionised water and 5% by total weight of the mini-emulsion. A 10% solution of sodium persulfate is prepared in a second delay vessel. The jacket of the reactor is heated until the reactor mixture reaches 82°C, at which point part of the initiator solution is charged over 5 minutes. Then 10 minutes after the end of the initiator shot, the mini-emulsion delay and the initiator delay are started. The mini-emulsion delay period is 160 minutes and the initiator delay period is 190 minutes. The reaction temperature is maintained at 82°C during the delays.

At the end of the mini-emulsion ((a)(i)) delay), the pre-emulsion ((a)(ii)) delay) is started. The pre-emulsion delay period is 20 minutes. When all the delays are finished (pre-emulsion delay and initiator delay) the reactor content is held for 60 minutes at 82°.

After the hold period, the reaction temperature is cooled to 60°C and the post-polymerization redox initiator system may be added as described below together with other ingredients labelled 'E' in Table 1 (which may also be optionally added for Example 2). The reducing agent, (Rongalit C), is added as a delay over 30 minutes and the oxidant agent, (t-BHP) is added as a delay over 15 minutes. The batch is held at 60°C for 30 minutes and cooled to 45°C. Then, the reactor mixture is cooled to 30°C and the biocide MBS is added to produce an example of the present invention.

Both the tackified dispersions of Examples 1 and 2 may be used produce tackified PSAs that may be coated onto a transparent facestock to form a PSA film having some or all of the advantageous properties described herein.

## Claims

1. A multi step process for preparing an aqueous dispersion of heterogeneous polymer particles by mini-emulsion polymerisation, the process comprising the steps of
(I)
(a) forming a mixture comprising:
(i) water;
(ii) at least one stabliser;
(iii) at least one tackifier; and
(iv) at least one α,β-ethylenically unsaturated monomer; and
(b) applying high shear to the mixture from step (a) to form an essentially stable mini-emulsion comprising an aqueous continuous phase and dispersed therein stabilised droplets of average diameter from about 10 to about 1000 nm,
(c) polymerising the monomer(s) within the droplets in the presence of a free radical initiator;
(d) optionally adding further monomer to the dispersed phase followed by:
(II) using the product (optionally as a dispersion) from step (I) as a seed to form a dispersion of heterogeneous polymer particles in a subsequent emulsion polymerisation.

2. A process according to the preceding claim, in which the tackifier is selected from one or more suitable hydrophobic tackifier(s) such as polyterpenes, rosin resins and/or hydrocarbon resins.

3. A process according to either preceding claim, in which the stabiliser comprises A) at least one surfactant and/or colloidal stabiliser together with B) at least one hydrophobic co-stabiliser.

4. A process according to claim 3, in which in step (a) the mixture is formed by mixing a first (aqueous) pre-mixture comprising an amphiphilic stabilising polymer as a colloidal stabiliser and water with a second (organic) pre-mixture comprising a hydrophobic co-stabiliser and the α,β-ethylenically unsaturated monomer.

5. A process according to claim 4, in which a polymerisation initiator is incorporated (optionally dissolved) in the second pre-mixture.

6. A process according to either claim 4 or 5, where the amphiphilic stabilising polymer is a polymer derived from a combination of hydrophobic monomers and hydrophilic monomers.

7. A process according to claim 6, where the amphiphilic stabilising polymer comprises a polymer derived from a combination of hydrophobic monomers and hydrophilic monomers that comprise acid functions or functions leading thereto.

8. A process according to claim 7, where the amphiphilic stabilising polymer comprises copolymer(s) derived from styrene and maleic anhydride and/or from styrene, α-methyl styrene and acrylic acid.

9. A process according to any of claims 4 to 8, where the amphiphilic stabilising polymer has a solubility in the aqueous phase measured at 25°C of at least about 1x10⁻² g/l.

10. A process according to any of claims 4 to 9, where the amount of amphiphilic stabilising polymer used is from about 0.5% to about 15 % by weight relative to the total weight of α,β-ethylenically unsaturated monomer(s).

11. A process according to any of claims 3 to 10, where the hydrophobic co-stabiliser has a solubility in water, measured at 25°C, of less than about 5x10⁻⁵ g/l.

12. A process according to any of claims 3 to 11, where the hydrophobic co-stabiliser is selected from the group consisting of: C₁₂₋₁₄alkanes, C₁₂₋₁₄alcohols, C₁₈₋₂₂acrylates and mixtures thereof.

13. A process according to any of claims 3 to 12, where the hydrophobic co-stabiliser is used in an amount from about 0.05% to about 40% by weight based on the total weight of the mixture prepared in step (a).

14. A process according to any preceding claim, where the α,β-ethylenically unsaturated monomer has a solubility in water, measured at 25°C, of less than about 15%.

15. A process according to any preceding claim, where the α,β-ethylenically unsaturated monomer is selected from the group consisting of: styrenes, acrylates, methacrylates, vinyl and vinylidene halides, dienes, vinyl esters and mixtures thereof.

16. A process according to any preceding claim, where one or more water-soluble monomer(s) having a water solubility, measured at 25°C, higher than about 15% are added to the mixture of step (a) in an amount less than about 6% by weight of the total monomer(s).

17. A process according to any preceding claim, where one or more components that modify the pH are added to the mixture formed in step (a).

18. A process according to any preceding claim, where step (b) produces a mini-emulsion comprising stabilised droplets having an average diameter from about 50 nm to about 500 nm.

19. A process according to any preceding claim, where the high stress in step (b) is applied by equipment that produces localised high shear, optionally in combination with moderate bulk mixing.

20. A stable aqueous polymer dispersion obtained and/or obtainable indirectly and/or directly by a process as claimed in any preceding claim.

21. A stable aqueous polymer dispersion comprising a matrix of polymer particles formed from at least one α,β-ethylenically unsaturated monomer, the particles having an average diameter from about 10 to about 1000 nm, and being homogenously dispersed with the polymer matrix, and where the dispersion comprises: (i) at least one amphiphilic stabilising polymer of number average molecular weight (Mₙ) from about 800 to about 100,000 daltons and an acid number from about 50 to about 400 mg KOH/g; and (ii) optionally at least one hydrophobic co-stabiliser as a tackifier.

22. Use of a polymer dispersion as claimed in either claim 20 or 21 to prepare a coating; film, adhesive and/or ink composition.

23. A coating; film, adhesive and/or ink composition obtained and/or obtainable using a polymer dispersion as claimed in either claim 20 or 21.
